# EUROPEAN PATENT APPLICATION

(11) **EP 2 284 373 A1**
(43) Date of publication of application: **16.02.2011**
(21) Application number: 09742680.3
(22) Date of filing: 24.04.2009
(51) Int. Cl.: F01P 11/16, F01N 1/00, F01P 3/18, F01P 5/02

(54) **ENGINE-CONTAINING PACKAGE**

(30) Priority: 07.05.2008 JP 2008121529
(71) Applicant: Yanmar Co., Ltd., Osaka-shi, Osaka 530-0013 (JP)
(72) Inventor: ONO, Masaaki, Osaka-shi Osaka 531-0076 (JP); HAYASHI, Toshiyuki, Osaka-shi Osaka 531-0076 (JP); KIHARA, Hirotoshi, Osaka-shi Osaka 531-0076 (JP); MATSUMURA, Shojiro, Osaka-shi Osaka 541-0046 (JP)
(74) Representative: Harland, Linda Jane
(86) International application number: PCT/JP2009/058150
(87) International publication number: WO 2009/136556

(57) **Abstract**

In the context of an enclosure-housed engine in which an engine 10 is housed within an enclosure 2, the present invention is such that arranged in an intake chamber 8A, separate from one or more chambers where a radiator 18 and the engine are disposed, there is engine intake equipment comprising an air cleaner 22 and an intake silencer 23; the constitution being such that at least one wall face of said intake chamber is subjected to a cooling airstream, intake and exhaust of which are driven by a radiator fan; and the constitution being such that the radiator fan 19 is driven, regardless of whether or not engine coolant within the radiator is circulating, when outside air temperature is greater than or equal to a prescribed temperature.

## Description

### TECHNICAL FIELD

The present invention relates to enclosure(s) for housing of engine(s), electric generator(s), waste heat recovery device(s) and/or other such equipment such as might, for example, be employed in cogeneration apparatus(es).

### BACKGROUND ART

Conventionally disclosed in the context of an enclosure-housed cogeneration apparatus or the like is a constitution in which engine intake equipment comprising an air cleaner and an intake silencer is arranged in a chamber separate from a chamber in which an engine is disposed, with the intake silencer also serving as a fan shroud inasmuch as it is disposed peripherally about the radiator fan (see, for example, Patent Reference No. 1).

### PRIOR ART REFERENCES

### PATENT REFERENCES

PATENT REFERENCE NO. 1: Japanese Patent Application Publication Kokai No. H07[1995]-151028

### SUMMARY OF INVENTION

### PROBLEM TO BE SOLVED BY INVENTION

In the aforementioned constitution of the prior art reference, because the intake silencer is constituted by a fan shroud, it is difficult to use the intake silencer with other models.

Furthermore, it is not preferred to use engine intake equipment under conditions where high temperatures prevail. For example, in a cogeneration apparatus that employs a gas engine, gas fuel and air are combined at a mixer, and the gas mixture is thereafter supplied to the engine. Because a high air temperature will result in reduced density, this prevents sufficient supply of air and causes reduction in engine performance.

In particular, because cogeneration apparatuses are constituted such that engine, electric generator, radiator, intake equipment, exhaust equipment, and other such components are housed internally within an enclosure, it is necessary to prevent the air cleaner and the intake silencer from being subjected to high temperatures due to the heat produced during operation.

The present application addresses the problem of preventing engine intake equipment comprising air cleaner(s) and intake silencer(s) from being subjected to high temperature, and in addition, addresses the problem of constituting the intake silencer in the form of independent equipment such as will make it capable of being used in other models.

### MEANS FOR SOLVING PROBLEM

The present invention, being conceived in order to solve the aforesaid problems, is an enclosure for housing an engine wherein, arranged in an intake chamber, separate from one or more chambers where a radiator and an engine are disposed, there is engine intake equipment comprising an air cleaner and an intake silencer; the constitution being such that at least one wall face of said intake chamber is subjected to a cooling airstream, intake and exhaust of which are driven by a radiator fan; and the constitution being such that the radiator fan is driven, regardless of whether or not engine coolant within the radiator is circulating, under conditions equivalent to presence of an engine intake air temperature that is greater than or equal to a prescribed temperature.

Note that what is described as conditions equivalent to presence of an engine intake air temperature that is greater than or equal to a prescribed temperature refers to presence of an intake air density that is less than or equal to a prescribed value as calculated based on temperature of air within the air cleaner, intake chamber temperature, radiator chamber temperature, enclosure ambient temperature, and/or amount of fuel supplied (e.g., degree to which gas fuel supply valve is open).

In the aforesaid present invention, the radiator fan is driven under conditions equivalent to presence of an engine intake air temperature that is greater than or equal to a prescribed temperature, even when engine coolant is not circulating within the radiator. At such time, at least one wall face of the intake chamber at which an air cleaner and an intake silencer are arranged is subjected to a cooling airstream produced by a radiator fan, making it possible to prevent propagation of heat from the radiator chamber to the intake chamber by way of the one wall face. Simultaneous therewith, because driving of the radiator fan causes the radiator chamber to have a greater negative pressure than at the intake chamber, which is maintained at negative pressure while the engine is operating, leakage of high-temperature air from the radiator chamber to the intake chamber can be eliminated, making it possible to prevent flow of heat thereinto.

Furthermore, when temperature within the intake chamber is high, it is also possible to cause heat within the intake chamber to escape to the radiator chamber by way of the one wall face. As a result, it is possible to suppress increase in temperature of engine intake equipment and it is possible to prevent reduction in engine intake efficiency.

Furthermore, because it is possible to constitute the intake silencer in the form of independent equipment, it is capable of being used in other models.

Moreover, in the present invention, an exhaust silencer is arranged in an exhaust chamber that is separate from the intake chamber and from the chamber or chambers where the engine and the radiator are disposed.

In the aforesaid present invention, because the exhaust silencer is isolated from the intake silencer and the air cleaner, it is possible to prevent transfer of engine waste heat to such equipment.

### BENEFIT OF INVENTION

In the present invention, because the radiator fan is driven under conditions equivalent to presence of an engine intake air temperature that is greater than or equal to a prescribed temperature even when engine coolant is not circulating within the radiator, it is possible to suppress increase in temperature of engine intake equipment and it is possible to prevent reduction in engine intake efficiency. Furthermore, because it is possible to constitute the intake silencer in the form of independent equipment, it is capable of being used in other models.

### BRIEF DESCRIPTION OF DRAWINGS

[FIG. 1] FIG. 1 is a front perspective view showing the entirety of a cogeneration apparatus associated with one embodiment of the present invention.
[FIG. 2] FIG. 2 is a rear perspective view showing the entirety of same cogeneration apparatus.
[FIG. 3] FIG. 3 is a plan view showing same cogeneration apparatus in schematic fashion.
[FIG. 4] FIG. 4 is a sectional view showing in schematic fashion an intake chamber and a radiator chamber in same cogeneration apparatus, (a) being a front view of the situation that exists when the radiator fan is turned off, and (b) being a front view of the situation that exists when the radiator fan is turned on.
[FIG. 5] FIG. 5 is a front sectional view showing in schematic fashion an intake chamber and a radiator chamber associated with another embodiment of the present invention.

### EMBODIMENTS FOR CARRYING OUT INVENTION

Below, embodiments of the present invention are described with reference to the drawings.

In the present embodiment, description is carried out in terms of a situation in which the present invention is applied to a cogeneration apparatus 1. Note that cogeneration apparatus 1 refers to a system, where a commercial electric power subsystem of an external commercial power supply and an electric power generation subsystem of an electric generator are connected to an electric power delivery subsystem that delivers electric power to electric power consuming equipment (load), that meets the electric power demand of said load, that recovers waste heat generated in accompaniment to electric power generation, and that utilizes said recovered heat.

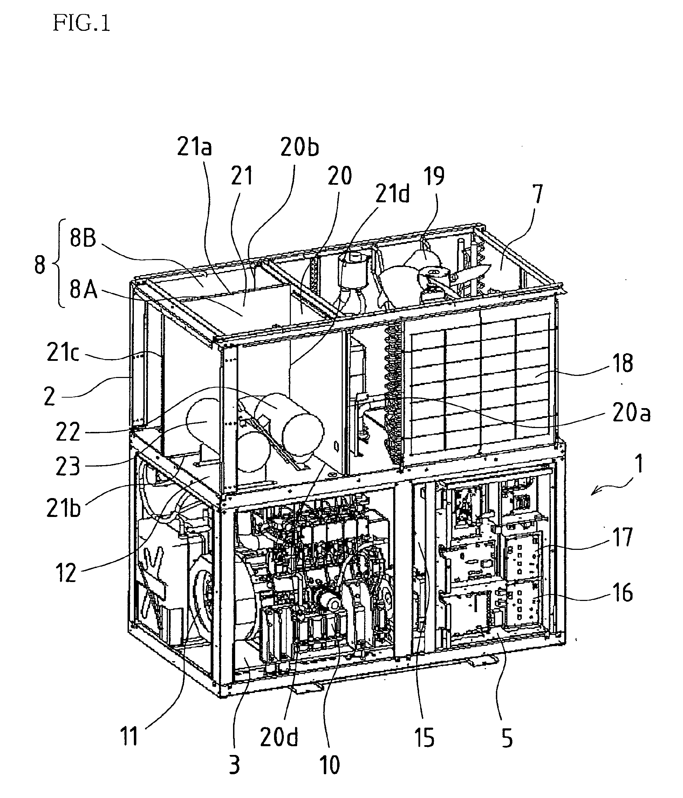

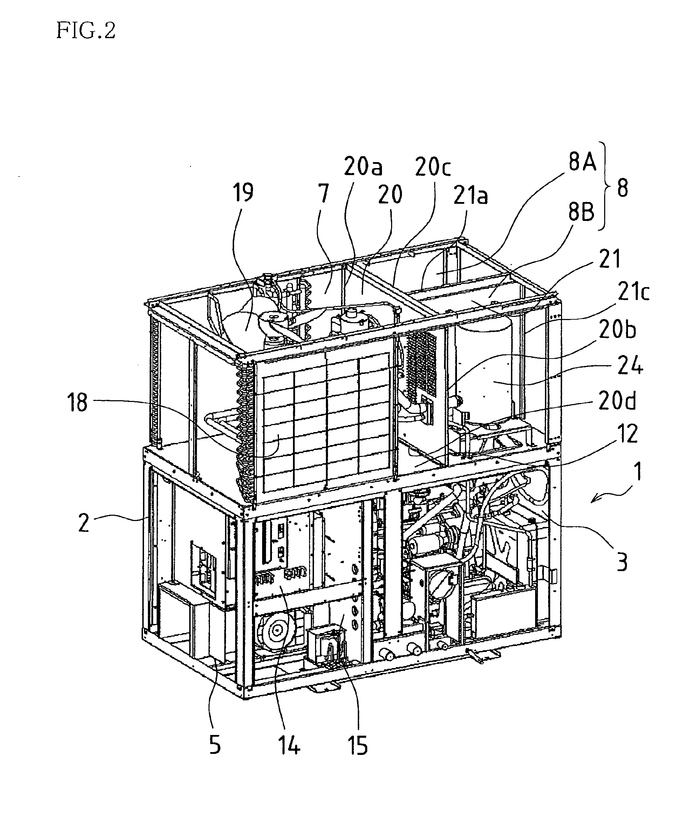

FIG. 1 shows a front perspective view of a cogeneration apparatus, and FIG. 2 shows a rear perspective view of same apparatus. As shown in FIG. 1 and FIG. 2, cogeneration apparatus 1 associated with the present embodiment is equipped with enclosure 2, serving as case, which is formed in roughly rectangular parallelepiped fashion. The interior of this enclosure 2 is divided vertically into two regions by intermediate wall 12 located approximately midway in the vertical direction of enclosure 2, the lower region comprising engine chamber 3 and equipment housing chamber 5, and the upper region comprising radiator chamber 7 and intake/exhaust chamber 8.

The aforesaid engine chamber 3 is disposed to one side in a long direction of the enclosure 2. Arranged within this engine chamber 3 there are an engine 10, an electric generator 11 driven by this engine 10, and various items including a coolant pump, an exhaust gas heat exchanger, and a liquid-liquid heat exchanger which are not shown in the drawings. Note that a gas engine may for example be employed as engine 10, gas fuel and air being combined at a mixer so as to allow it to operate. In addition, rotation of said engine 10 causing electric generator 11, provided in linked fashion with respect to said engine 10, to be driven in linked accompaniment with respect thereto.

The aforesaid equipment housing chamber 5 is arranged to the side (right side as shown in FIG. 1) of engine chamber 3. This equipment housing chamber 5 is partitioned from engine chamber 3 by partition 15. Arranged within equipment housing chamber 5 there are such items as an inverter 14 and a control box 17 equipped with such items as a control apparatus 16 for controlling liquid-liquid heat exchanger equipment and engine drive equipment.

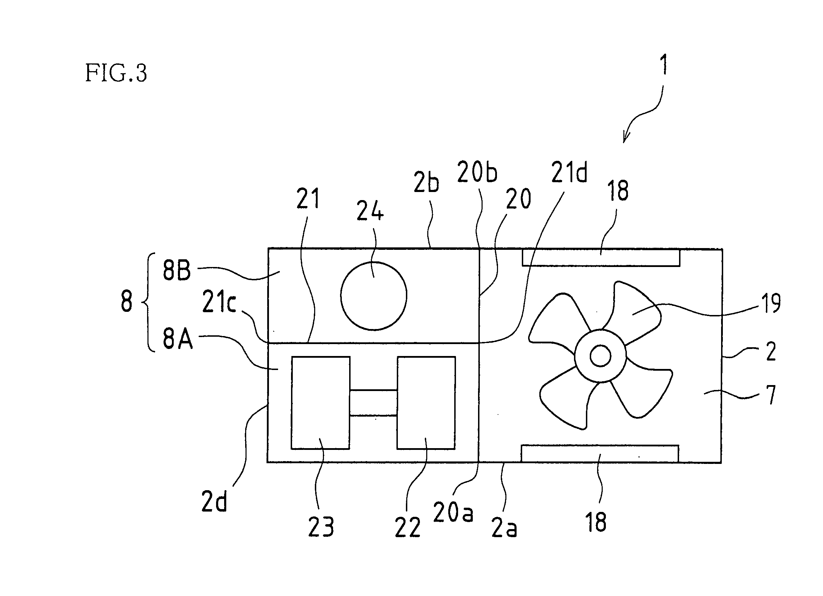

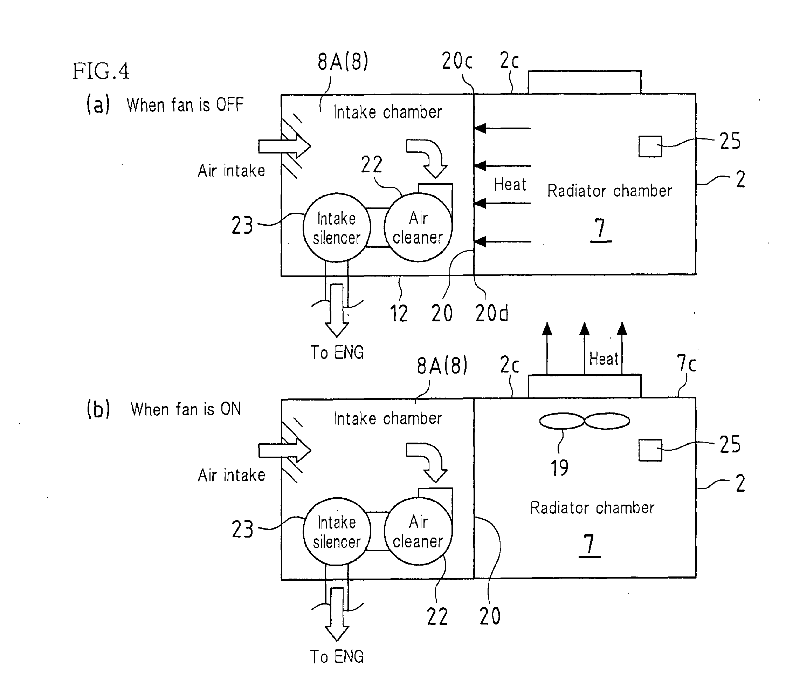

The aforesaid radiator chamber 7 is arranged above equipment housing chamber 5, being disposed within enclosure 2 along a diagonal from engine chamber 3 (diagonally thereabove). As shown in FIG. 3 and FIG. 4, radiator 18 is respectively arranged at the front and back of radiator chamber 7, and heat-dissipating radiator fan 19, driving of which is controlled by the aforesaid control apparatus 16, is arranged in the upper portion of radiator chamber 7.

Radiator chamber 7 and intake/exhaust chamber 8 are partitioned by partition 20, which might, for example, comprise sheet metal. That is, front and back edges 20a, 20b of partition 20 are connected to front and back walls 2a, 2b of enclosure 2. Top edge 20c of partition 20 is connected to roof 2c of enclosure 2, and bottom edge 20d is connected to intermediate wall 12.

Moreover, intake/exhaust chamber 8 is partitioned into intake chamber 8A and exhaust chamber 8B by partition 21, which might, for example, comprise sheet metal. Specifically, partition 21 is arranged midway in the front-to-back direction of intake/exhaust chamber 8, intake chamber 8A being disposed at the front side thereof, and exhaust chamber 8B being disposed at the back side thereof. Top edge 21 a of partition 21 is connected to roof 2c of enclosure 2, and bottom edge 21 b is connected to intermediate wall 12. The edge 21 c at one side of partition 21 is connected to the wall at one side of enclosure 2, and the edge 21 d at the other side thereof is connected in T-shaped fashion to the aforesaid partition 20.

Furthermore, a louvered portion is provided at the exhaust chamber 8B side of partition 20 as shown in FIG. 2, a ventilation hole for engine chamber 3 being provided at a location in intermediate wall 12 corresponding to the floor of exhaust chamber 8B, such that the ventilating airstream from the engine chamber flows from the aforesaid ventilation hole, past exhaust chamber 8B and the louvered portion of partition 20, and into radiator chamber 7.

However, at partition 21, there being nothing corresponding to a vent hole, flow of air between intake chamber 8A and exhaust chamber 8B is prevented. What is meant when it is said that flow of air is prevented is that flow of air between intake chamber 8A and exhaust chamber 8B is such that flow from either is insufficient to affect the temperature of the other.

Respectively arranged at intake chamber 8A are air cleaner 22 and intake silencer 23. Arranged at exhaust chamber 8B is exhaust silencer 24.

Provided at the aforesaid radiator chamber 7 is a temperature sensor (sensor) 25 for detecting as detected temperature the temperature within radiator chamber 7. By virtue of the signal from this sensor 25, in the event that it is determined that temperature within radiator chamber 7 is greater than or equal to setpoint temperature, control apparatus 16 causes radiator fan 19 to be driven, regardless of whether or not engine coolant within radiator 18 is circulating. That is, not only when engine coolant is circulating within radiator 18 but even when engine coolant is not circulating within radiator 18, control apparatus 16 causes radiator fan 19 to be driven when temperature within radiator chamber 7 is greater than or equal to setpoint temperature.

Cogeneration apparatus 1 of the present embodiment having the foregoing constitution, operation of such apparatus 1 will next be described.

First, gas fuel is supplied to a mixer, not shown, that is connected to engine 10; and furthermore, air that has been sucked into intake chamber 8A is supplied to the mixer by way of air cleaner 22 and intake silencer 23. Furthermore, exhaust gas exhausted from said engine 10 passes through an exhaust gas heat exchanger and is silenced at exhaust silencer 24, and is thereafter discharged to the exterior from the top of enclosure 2.

In the event that coolant temperature as detected at a thermostat is greater than or equal to a setpoint temperature, engine coolant that has cooled engine 10 is delivered to a liquid-liquid heat exchanger, not shown. Furthermore, heat from engine coolant is extracted to the exterior by way of the liquid-liquid heat exchanger. Engine coolant that has passed through the liquid-liquid heat exchanger is returned to engine 10. Note that the coolant circuit of the present embodiment is such that the liquid-liquid heat exchanger and radiator 18 are arranged in series, engine coolant being delivered to radiator 18 when the amount of heat exchange occurring at the liquid-liquid heat exchanger is small. At this time, radiator fan 19 is driven and heat from engine coolant is dissipated.

When engine coolant within radiator 18 is cooled by radiator fan 19, the temperature within radiator chamber 7 increases due to dissipation of heat from radiator 18.

However, when the amount of heat exchange occurring at the liquid-liquid heat exchanger is large, engine coolant is made to bypass radiator 18 and is returned to engine 10. Accordingly, in such case, there is no need to drive radiator fan 19 for the purpose of cooling engine coolant circulating within radiator 18. Nonetheless, the chamber temperature at radiator chamber 7 increases due to the high-temperature ventilating airstream from engine chamber 3 that is exhausted from radiator chamber 7 by way of exhaust chamber 8B, thermal conduction from intermediate wall 12 of heat dissipated from engine 10, heat dissipated from exhaust silencer 24 and exhaust tubing, and the high-temperature engine coolant remaining within radiator 18.

Sensor 25 detects the temperature within radiator chamber 7, and sends that signal to control apparatus 16. At control apparatus 16, if based on the signal from sensor 25 a temperature is detected that is greater than or equal to a setpoint temperature, this is determined to indicate presence of conditions equivalent to an engine intake air temperature that is greater than or equal to a prescribed temperature, and radiator fan 19 is driven regardless of whether or not engine coolant is circulating at radiator 18. In the present embodiment, radiator chamber 7 and intake chamber 8A being mutually adjacent with partition 20 intervening therebetween, a high chamber temperature at radiator chamber 7 will cause heat transfer from radiator chamber 7 to intake chamber 8A to occur due to thermal conduction from partition 20A. Furthermore, when radiator fan 19 is stopped while engine 10 is operating, the fact that intake chamber 8A has negative pressure while radiator chamber 7 has positive pressure may cause air to leak from radiator chamber 7 into intake chamber 8A, and so when there is a high chamber temperature at radiator chamber 7, this leakage of high-temperature air will also cause occurrence of heat transfer from radiator chamber 7 to intake chamber 8A. Because of these effects, when chamber temperature at radiator chamber 7 is high, there is a tendency for the chamber temperature at intake chamber 8A to also be high and for engine intake air density to decrease, such that the effective intake rate is reduced and intake efficiency of engine 10 is lowered. Note that besides the chamber temperature at radiator chamber 7, it is also possible to detect the temperature within ventilation duct(s) for engine chamber 3 and/or detect chamber temperature at intake chamber 8A to determine presence of conditions equivalent to an engine intake air temperature that is greater than or equal to a prescribed temperature, or it is also possible to determine this without detection of temperature but instead based on the degree to which the gas fuel supply valve is open.

This driving of radiator fan 19 causes ventilation of the interior of radiator chamber 7 and dissipation of heat therefrom. Partition 20, which partitions radiator chamber 7 and intake chamber 8A, is subjected to cooling airstream(s), intake and exhaust of which are driven by radiator fan 19, making it possible to prevent increase in the temperature of partition 20. Simultaneous therewith, radiator chamber 7 is made to have negative pressure, eliminating leakage of air into intake chamber 8A, and making it possible to prevent increase in temperature of intake chamber 8A due to heat transfer from radiator chamber 7. As a result, it is possible to suppress increase in temperature at air cleaner 22 and intake silencer 23, and it is possible to prevent reduction in intake efficiency of engine 10.

Furthermore, while passage of exhaust gas through exhaust silencer 24 does cause heating of exhaust silencer 24, because exhaust silencer 24, being arranged in exhaust chamber 8B, is isolated from air cleaner 22 and intake silencer 23, it is possible to prevent transfer of engine waste heat to such equipment (air cleaner 22 and intake silencer 23).

Furthermore, because intake silencer 23 is independently arranged at intake chamber 8A, it is capable of being used in other models.

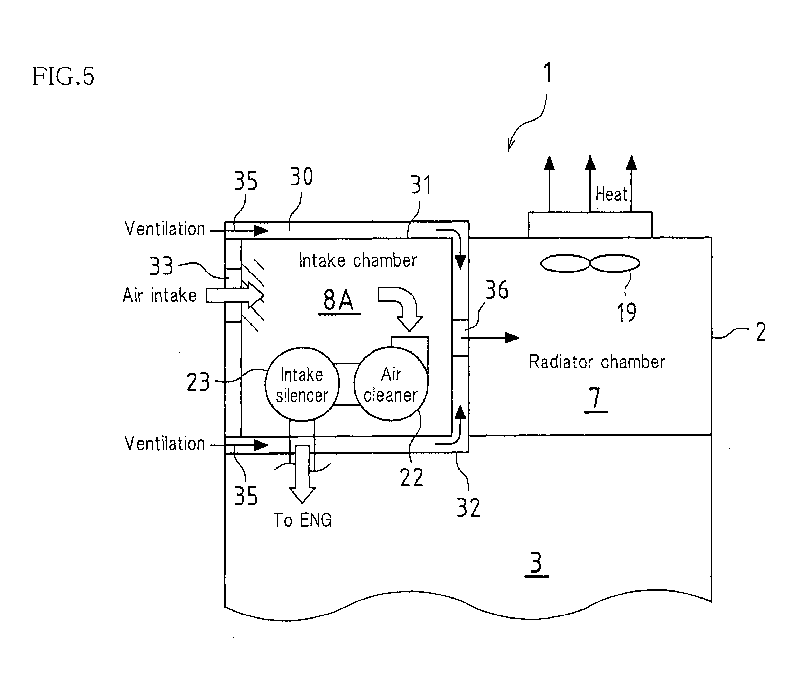

FIG. 5 shows another embodiment of the present invention. At same FIG., the embodiment shown is such that ventilation ducts 30 comprising air passages are formed peripherally about intake chamber 8A in a constitution preventing heat transfer from radiator chamber 7 to intake chamber 8A. Specifically, arranged outside and at a prescribed distance from inner wall 31, which forms intake chamber 8A, is outer wall 32, ventilation ducts 30 being formed between these inner and outer walls 31, 32. While it is preferred that outer wall 32 be provided at the top, bottom, front, back, and left and right faces of inner wall 31, it may be provided at any desired face(s).

Furthermore, formed at inner and outer walls 31, 32 is intake port 33, which communicates with intake chamber 8A. Moreover, at outer wall 32, ventilation holes 35, which communicate with ventilation ducts 30, are formed, and in addition, exhaust port 36, which communicates with radiator chamber 7, is formed.

As a result of employment of such constitution, outside air enters intake chamber 8A from intake port 33. When radiator fan 19 is actuated, ventilation of air from the interior of radiator chamber 7 causes outside air to flow from ventilation holes 35, along ventilation ducts 30, through exhaust port 36, and into radiator chamber 7. By subjecting inner wall 31 to such cooling airstream(s) produced by intake and exhaust of radiator fan 19, it is possible to prevent transfer of heat from adjacent compartment(s) such as radiator chamber 7, engine chamber 3, and exhaust chamber 8B into intake chamber 8A.

The present invention is not limited to the foregoing embodiment. For example, it is possible to provide sensor 25 at other than radiator chamber 7 as has been described above. Alternatively, a constitution is also possible in which whether or not conditions equivalent to an engine intake air temperature that is greater than or equal to a prescribed temperature are present is determined without detection of temperature.

Furthermore, it is also possible to employ the present invention in a GHP (gas heat pump).

The present invention may be embodied in a wide variety of forms other than those presented herein without departing from the spirit or essential characteristics thereof. The foregoing embodiments and working examples, therefore, are in all respects merely illustrative and are not to be construed in limiting fashion. The scope of the present invention being as indicated by the claims, it is not to be constrained in any way whatsoever by the body of the specification. All modifications and changes within the range of equivalents of the claims are, moreover, within the scope of the present invention.

Moreover, this application claims priority based on Patent Application No. 2008-121529 filed in Japan on 7 May 2008. The content thereof is hereby incorporated in the present application by reference.

### POTENTIAL INDUSTRIAL USE

The present invention is effective as an enclosure for housing an engine and engine intake equipment; and is particularly suited to use in an enclosure-housed cogeneration apparatus or GHP (gas heat pump) that houses engine(s), electric generator(s), waste heat recovery device(s) and/or other such equipment.

### EXPLANATION OF REFERENCE NUMERALS

- 1: Cogeneration apparatus
- 2: Enclosure
- 3: Engine chamber
- 5: Equipment housing chamber
- 7: Radiator chamber
- 8: Intake/exhaust chamber
- 8A: Intake chamber
- 8B: Exhaust chamber
- 10: Engine
- 11: Electric generator
- 14: Inverter
- 16: Control apparatus
- 17: Control box
- 18: Radiator
- 19: Radiator fan
- 22: Air cleaner
- 23: Intake silencer
- 24: Exhaust silencer
- 25: Sensor

## Claims

1. An enclosure for housing an engine,
the engine housing enclosure being **characterized in that** arranged in an intake chamber separate from one or more chambers where a radiator and an engine are disposed, there is engine intake equipment comprising an air cleaner and an intake silencer; the constitution being such that at least one wall face of said intake chamber is subjected to a cooling airstream, intake and exhaust of which are driven by a radiator fan; and the constitution being such that the radiator fan is driven, regardless of whether or not engine coolant within the radiator is circulating, under conditions equivalent to presence of an engine intake air temperature that is greater than or equal to a prescribed temperature.

2. An engine housing enclosure according to claim 1, the engine housing enclosure being **characterized in that** an exhaust silencer is arranged in an exhaust chamber that is separate from the intake chamber and from the chamber or chambers where the engine and the radiator are disposed.
